# EUROPEAN PATENT SPECIFICATION

(11) **EP 4 456 289 B1**
(45) Date of publication and mention of the grant of the patent: **28.10.2026**
(21) Application number: 23886158.7
(22) Date of filing: 30.10.2023
(51) Int. Cl.: H01M 50/24, H01M 50/204, F16J 15/06, H01M 50/207

(54) **BATTERY PACK**
BATTERIEPACK
BLOC-BATTERIE

(30) Priority: 02.11.2022 KR 20220144331
(43) Date of publication of application: 30.10.2024
(60) Divisional application: 26204132.0 / 4 832 191
(73) Proprietor: LG Energy Solution, Ltd., Seoul 07335 (KR)
(72) Inventor: HUR, Nam Hoon, Daejeon 34122 (KR); LEE, Hyoung Suk, Daejeon 34122 (KR); SHIN, Ju Hwan, Daejeon 34122 (KR); YANG, Chang Hyeon, Daejeon 34122 (KR)
(74) Representative: Plasseraud IP
(86) International application number: PCT/KR2023/016952
(87) International publication number: WO 2024/096462

(56) References cited:
- EP-A1- 4 525 156
- CN-U- 211 980 723
- CN-U- 212 182 421
- CN-U- 213 042 997
- CN-U- 213 042 997
- CN-U- 213 752 872
- CN-U- 213 752 872
- KR-A- 20220 087 730
- KR-B1- 102 065 126
- US-A1- 2013 252 058

## Description

### [Technical Field]

The present invention relates to a battery pack, and more particularly, to a battery pack in which a pack gasket installed between an upper lid and a side wall frame is effectively protected.

This application claims the benefit of priority based on Korean Patent Application No. 10-2022-0144331, filed on November 2, 2022.

### [Background Art]

A battery pack for use in electric vehicles, etc. has a structure in which a plurality of battery modules including a plurality of secondary batteries are accommodated and connected in series or in parallel to obtain high power. The secondary batteries each include positive and negative current collectors, a separator, an active material, an electrolyte, etc. and thus can be repeatedly charged and discharged through an electrochemical reaction between these components.

For a sealing purpose, a pack gasket is installed between an upper lid covering an upper part of the battery pack and an upper surface of a lower pack housing accommodating the battery modules.

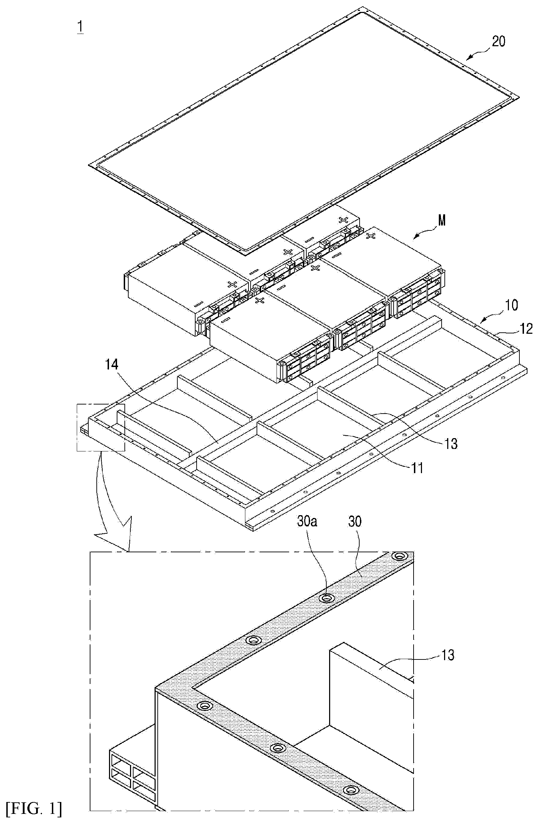

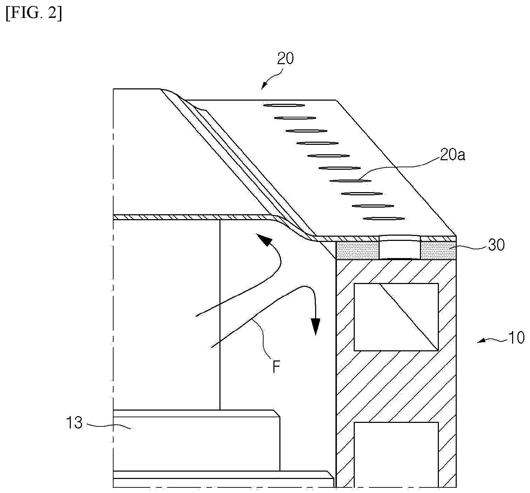

FIG. 1 is an exploded perspective view of a battery pack of the related art. FIG. 2 is a schematic diagram illustrating a state in which flames occur in a battery pack of the related art.

As shown in FIG. 1, a battery pack 1 of the related art includes a lower pack housing 10 for accommodation of battery modules M, and an upper lid 20 coupled to the lower pack housing 10 while covering the lower pack housing 10. The lower pack housing 10 includes a bottom plate 11 and a side wall frame 12 surrounding edges of the bottom plate 11. The bottom plate 11 may include left and right partitions 13 and a central partition 13 to partition and accommodate battery modules.

A pack gasket 30 is installed on an upper surface of the side wall frame 12 for sealing. The pack gasket 30 is provided with a plurality of fastening holes 30a. An edge part of the upper lid 20 is provided with a plurality of fastening holes corresponding to the plurality of fastening holes 30a. Accordingly, the upper lid 20 and the pack gasket 30 are coupled to the side wall frame 12 by coupling a fastening member to the corresponding fastening holes of the upper lid 20 and the pack gasket 30.

FIG. 2 illustrates a state in which the upper lid 20 is coupled to the side wall frame 12 while the pack gasket 30 is interposed therebetween. However, a high-temperature gas or flames may be generated inside a battery pack due to thermal runaway occurring in battery modules or battery cells accommodated in the battery pack. In FIG. 2, an arrow F indicates a direction of propagation of a gas and flames generated inside the battery pack. As shown in FIG. 2, a high-temperature gas or flames may move upward and come in contact with an inner side of the upper lid 20, sides of the pack gasket 30, and an inner side of the side wall frame 12. The upper lid 20 and the side wall frame 12 are formed of a metal such as steel or aluminum and thus may withstand up to a set heat-resistant temperature even when they come in contact with a high temperature gas and flames. However, generally, the pack gasket 30 is formed of flexible rubber (e.g., ethylene propylene diene monomer (EPDM)) for sealing and thus easily melts when exposed to flames. Otherwise, a leak may occur when the pack gasket 30 is pushed due to internal pressure of the pack when thermal runaway occurs. In this case, the sealing of the battery pack may be destroyed and a leak may occur and thus a high-temperature gas or flames may be discharged to the outside of the battery pack. In this case, there is a risk of secondary damage.

Accordingly, there is a need to develop a technique for protecting a pack gasket when an event such as flames occurs in a battery pack.

### [Related Art Literature]

### [Patent Document]

(Patent Document 1) Korean Patent Laid-Open Publication No. 2022 -0100465 CN 211 980 723U and CN 213 042 997U relate to battery packs.

### [Disclosure]

### [Technical Problem]

To address the above-described problem, the present invention is directed to providing a battery pack in which a blocking structure is installed on a side wall frame upper surface to protect a pack gasket.

### [Technical Solution]

According to an aspect of the present invention, a battery pack according to an embodiment of the present invention is defined in claim 1. It includes: a lower pack housing including a bottom plate and a side wall frame surrounding edges of the bottom plate; an upper lid coupled to an upper surface of the side wall frame while covering the lower pack housing; and a pack gasket installed between the upper surface of the side wall frame and the upper lid, in which a first protrusion blocking the inside of the battery pack and the pack gasket is provided along the upper surface of the side wall frame.

There may be a gap with a predetermined width between the first protruding part and the pack gasket.

A height of the first protruding part may be less than a height of the pack gasket, and an upper surface of the pack gasket may be located at the same height as an upper surface of the first protruding part due to the pressing of the upper surface of the pack gasket by a coupling force of the upper lid coupled to the side wall frame.

A second protruding part is provided along the upper surface of the side wall frame to cover another side of the pack gasket opposite to one side of the pack gasket blocked by the first protruding part, and the pack gasket is installed on the upper surface of the side wall frame between the first protruding part and the second protruding part.

There may be a gap with a predetermined width at least one of between the first protruding part and the pack gasket and between the second protruding part and the pack gasket.

Heights of the first protruding part and the second protruding part may be equal to each other and be less than a height of the pack gasket, and an upper surface of the pack gasket may be located at the same height as upper surfaces of the first protruding part and the second protruding part due to the pressing of the upper surface of the pack gasket by a coupling force of the upper lid coupled to the side wall frame.

The upper lid and the pack gasket may include through fastening holes corresponding to each other, and the upper lid and the pack gasket may be coupled to the upper surface of the side wall frame by coupling a fastening member to the side wall frame while passing through the through fastening holes.

The side wall frame are assembled by welding side wall frame parts disposed vertically, and the first protruding part and the second protruding part are not provided on the upper surface of the side wall frame that is in a range of a predetermined length with respect to a corner part of the side wall frame to which the side wall frame parts are welded.

A flame blocking bracket configured to block the corner part of the side wall frame from the inside of the battery pack may be coupled to a corner part of the upper lid corresponding to the corner part of the side wall frame.

The flame blocking bracket may extend horizontally from the corner part of the upper lid along an inner side of the corner part of the side wall frame to be equal to or greater than the predetermined length, and extend downward along the inner side of the corner part of the side wall frame to cover the cover part of the side wall frame.

The upper lid may be coupled to the side wall frame to cause the flame blocking bracket to be in close contact with or be spaced a predetermined distance from an inner side of the corner part of the side wall frame.

The upper lid may include a flange part coupled to the upper surface of the side wall frame and a cover part bent upward from the flange part, and the flame blocking bracket may be installed on a corner part of the cover part.

The flame blocking bracket may include an upper bracket coupled to the cover part, and a corner bracket extending downward from the upper bracket along an inner side of the corner part of the side wall frame.

### [Advantageous Effects]

According to the present invention, a first protruding part is provided on a side wall frame upper surface to block a pack gasket from the inside of a battery pack and thus the pack gasket can be stably protected even when a high-temperature gas or flames are generated, thereby maintaining or improving sealing performance of the battery pack.

According to the present invention, protruding parts are provided to cover both sides of the pack gasket, thereby more strictly protecting the pack gasket.

According to an embodiment of the present invention, there is a gap of a predetermined width between the pack gasket and the protruding parts to separate the pack gasket from a side wall frame, thereby preventing the pack gasket from melting due to heat transmitted from the side wall frame.

In addition, according to the present invention, no protruding part is formed at a corner part of the side wall frame, so that welded portions of side wall frame part protruding from the corner part can be easily planarized.

Furthermore, even when no protruding part is formed at the corner part of the side wall frame, a flame blocking bracket is installed to block the corner part of the side wall frame from the inside of the battery pack, thereby preventing the pack gasket on the corner part of the battery pack from being directly exposed to flames.

### [Brief Description of the Drawings]

FIG. 1 is an exploded perspective view of a battery pack of the related art.
FIG. 2 is a schematic diagram illustrating a state in which flames occur in a battery pack of the related art.
FIG. 3 is an exploded perspective view of a battery pack of a first illustrative example.
FIG. 4 is a partially cutaway perspective view of the battery pack of the first illustrative example.
FIG. 5 is a side cross-sectional view of the battery pack of the first illustrative example.
FIG. 6 is an exploded perspective view of a battery pack of a second illustrative example.
FIG. 7 is a side cross-sectional view of the battery pack of the second illustrative example and of the invention.
FIG. 8 is a partial perspective view of a battery pack of a third embodiment, which is according to the present invention.
FIG. 9 is a perspective view of a battery pack of a fourth embodiment, which is according to the present invention.
FIG. 10 is a perspective view of main parts of the battery pack of the fourth embodiment.
FIG. 11 is a partial perspective view of the battery pack of the fourth embodiment.
FIG. 12 is a partial cutaway perspective view of the battery pack of the fourth embodiment.

### [Best Mode]

Hereinafter, the present invention will be described in detail. Before describing the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof. It should be understood that when a component such as a layer, a film, a region, a plate or the like is referred to as being "on" another component, the component is "right on" the other component or another component is interposed between these components. It should be understood that when a component such as a layer, a film, a region, a plate or the like is referred to as being "below" another component, the component is "right below" the other component or another component is interposed between these components. In addition, it should be understood that when a component is "on" another component, the component is on or below the other component.

A battery pack according to an embodiment of the present invention includes: a lower pack housing including a bottom plate and a side wall frame surrounding edges of the bottom plate; an upper lid coupled to an upper surface of the side wall frame while covering the lower pack housing; and a pack gasket installed between the upper surface of the side wall frame and the upper lid, and a first protrusion blocking the inside of the battery pack and the pack gasket is provided along the upper surface of the side wall frame.

### [Embodiments of the Present Invention]

Hereinafter, embodiments of the present disclosure will be described in detail with reference to the accompanying drawings.

### (First illustrative example)

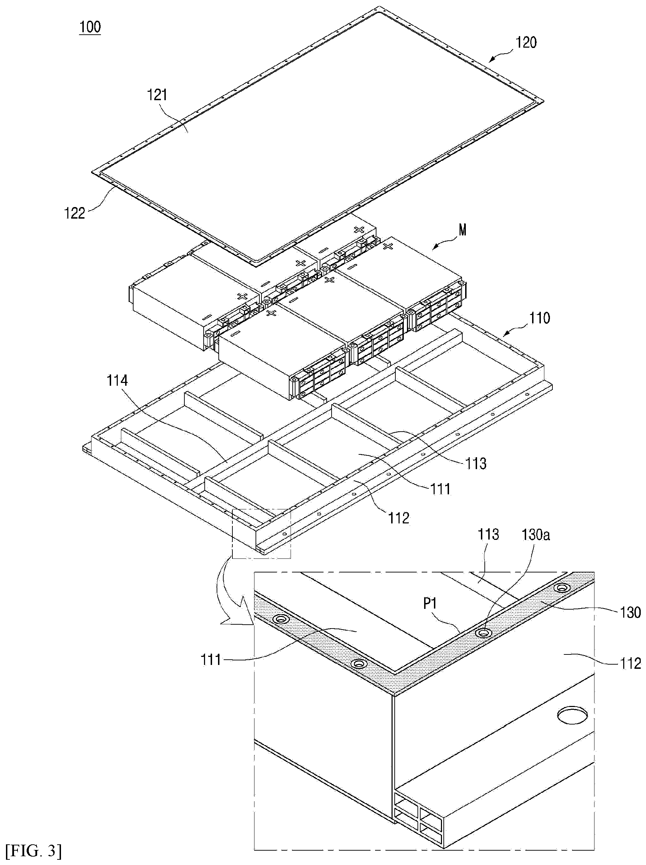

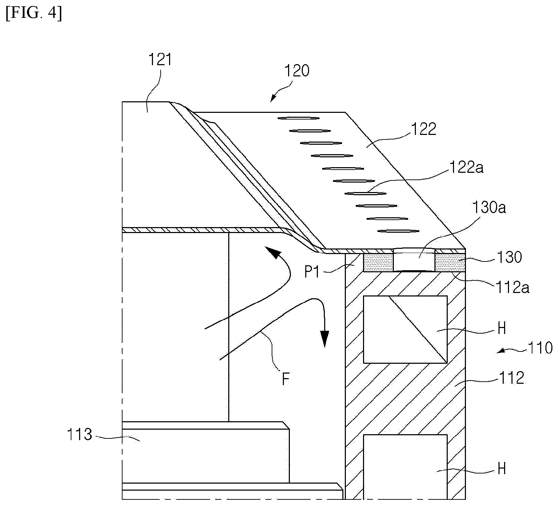

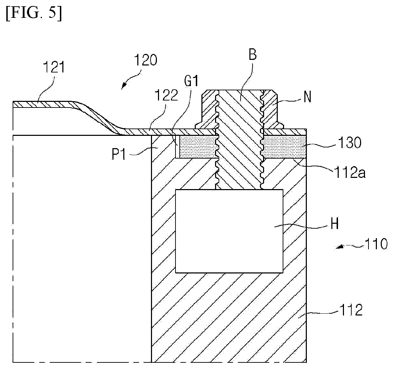

FIG. 3 is an exploded perspective view of a battery pack of a first illustrative example. FIG. 4 is a partially cutaway perspective view of the battery pack of the first illustrative example. FIG. 5 is a side cross-sectional view of the battery pack of the first illustrative example and of the invention.

A battery pack 100 of the first embodiment includes: a lower pack housing 110 including a bottom plate 111 and a side wall frame 112 surrounding edges of the bottom plate 111; an upper lid 120 coupled to a side wall frame upper surface 112a while covering the lower pack housing 110; and a pack gasket 130 installed between the side wall frame upper surface 112a and the upper lid 120.

A plurality of battery modules M are accommodated in the lower pack housing 110. The lower pack housing 110 includes the bottom plate 111 on which the battery modules M are seated. A cooling channel may be embedded in the bottom plate 111 or a cooling panel (not shown) embedded a cooling channel therein may be attached to the bottom plate 111. In addition, a thermally conductive resin layer (not shown) may be applied on the bottom plate 111. The bottom plate 111 may include partitions to partition and accommodate the battery modules M. In an illustrated example, left and right partitions 113 and a central partition 114 are installed on the bottom plate 111. However, a battery pack structure of the present invention is also applicable to a battery pack that does not include partitions. In addition, the shape of the partitions is not limited to the shape shown in FIG. 3, and other types of partitions are applicable.

The lower pack housing 110 includes the side wall frame 112 surrounding edges of the bottom plate 111. The side wall frame 112 may be assembled by coupling four panels (side wall frame parts) in front, rear, left, and right directions to each other. Adjacent side wall frame parts are disposed perpendicular to each other and ends thereof are coupled to each other. The ends of the side wall frame parts may be coupled to each other by a fastening member or coupled by welding contact surfaces of the ends.

The side wall frame parts may be manufactured by an extrusion process. In the extrusion process, hollow channels H as shown in FIG. 4 may be formed in the side wall frame parts in a direction of extrusion. Therefore, the weight of the side wall frame part may be reduced by a volume corresponding to the hollow channels H, thereby reducing the weight of the side wall frame 112. The hollow channels H may be used as either venting channels for a gas generated in the battery pack 100 or cooling medium channels.

The upper lid 120 is coupled to the side wall frame upper surface 112a while covering the lower pack housing 110. That is, the upper lid 120 is a part covering an open upper surface of the lower pack housing 110. The edge part of the upper lid 120 is coupled to the side wall frame upper surface 112a. The upper lid 120 may be formed in a flat plate shape. Alternatively, as shown in FIG. 4, the edge part of the upper lid 120 may be a flange part 122, and an inner part of the edge part of the upper lid 120 may be a cover part 121 bent upward from the flange part 122. In this case, the height of the cover part 121 is set to be greater than that of the flange part 122. As described above, when the upper lid 120 includes the flange part 122 and the cover part 121, flexural rigidity is greater than that when the upper lid 120 is in the form of a flat panel, thus increasing overall rigidity of the upper lid 120. In addition, a gap between the upper lid 120 and the battery module M increases and thus a gas generated in the battery pack 100 may be easily vented through the gap.

The pack gasket 130 is installed between the side wall frame upper surface 112a and the upper lid 120.

The pack gasket 130 is formed in a rectangular shape corresponding to the shape of the side wall frame 112, and is installed along the side wall frame upper surface 112a. A plurality of through fastening holes 130a are formed at predetermined intervals in the pack gasket 130. The pack gasket 130 is generally formed of flexible rubber (e.g., ethylene propylene diene monomer (EPDM)) for sealing.

As shown in FIG. 2, when a high-temperature gas or flames F are generated in the battery pack 100, the upper lid 120 and the side wall frame 112 may withstand up to a set heat-resistant temperature even when they come in contact with the high-temperature gas or the flames F, because the upper lid 120 and the side wall frame 112 are formed of a metal such as steel or aluminum. However, the pack gasket 130 formed of rubber may melt when exposed to the flames F.

In the present invention, to protect the pack gasket 130, a first protruding part P1 is provided on the side wall frame upper surface 112a to block the inside of the battery pack 100 and the pack gasket 130. That is, even when flames F occur in the battery pack 100 and reach the inner sides of the upper lid 120 and the side wall frame 112 as shown in FIG. 4, the first protruding part P blocks the pack gasket 130, thus preventing the flames F from reaching the pack gasket 130. As described above, in the present invention, the first protruding part P1 is positioned on a side of the pack gasket 130 opposite the inside of the battery pack 100 to protect the pack gasket 130 from the flames F, thereby maintaining the sealing performance of the pack gasket 130.

The first protruding part P1 is provided on the side wall frame upper surface 112a along the side of the pack gasket 130. The first protruding part P1 may have a rectangular shape corresponding to the shape of the pack gasket 130.

Meanwhile, the first protruding part P1 may be integrally molded with the side wall frame 112. Alternatively, the first protruding part P1 may be separately manufactured and coupled to the side wall frame upper surface 112a by welding or the like. In this case, the first protruding part P1 may be formed of a metal with a high melting point, such as steel or aluminum, to protect the pack gasket 130 from the flames F.

Even when the first protruding part P1 blocks the pack gasket 130 to prevent the pack gasket 130 from being directly exposed to the flames F, the pack gasket 130 may partially melt due to heat transferred from the side wall frame 112. That is, because the side wall frame 112 is formed of a metal with high thermal conductivity, heat from the side wall frame 112 heated by the flames F may be transferred to the pack gasket 130. In particular, heat may be transferred from the first protruding part P1 adjacent to the flames F to the pack gasket 130 in close contact with the first protruding part P1.

In consideration of this point, in the modified example of FIG. 5, there is a gap G1 with a predetermined width between the first protruding part P1 and the pack gasket 130. That is, in FIG. 5, the first protruding part P1 and the pack gasket 130 are not completely in close contact with each other but are spaced apart from each other by a small gap. Accordingly, heat from the first protruding part P1 may be prevented from being conducted to the pack gasket 130. In addition, because air may circulate through the gap G1, the gap G1 serves as an air cooling passage in a thermal runaway situation. Therefore, the pack gasket 130 may be more effectively protected from high-temperature heat.

FIGS. 4 and 5 illustrate an example in which the flange part 122 of the upper lid 120 is coupled to the side wall frame 112 while pressing the pack gasket 130. For convenience of description, a fastening member is not shown in FIG. 4. FIGS. 4 and 5 illustrate that the height of the first protruding part P1 is equal to that of the pack gasket 130.

However, it is preferable that the height of the pack gasket 130 be greater than that of the first protruding part P1 while the pack gasket 130 is seated on the side wall frame upper surface 112a, before the upper lid 120 is fastened. That is, the pack gasket 130 may be formed to be slightly thicker than the first protruding part P1. In this state, the upper lid 120 is coupled to the side wall frame 112 while covering the upper portion of the pack gasket 130. The upper lid 120 is also provided with a through fastening hole 122a at a position corresponding to the through fastening hole 130a of the pack gasket 130. The side wall frame 112 is also provided with a fastening hole at a position corresponding to the through fastening hole 122a of the upper lid 120 and the through fastening hole 130a of the pack gasket 130. Therefore, the upper lid 120 and the pack gasket 130 are coupled to the side wall frame upper surface 112a by coupling the fastening member B such as a bolt to the through fastening hole 122a of the upper lid 120, the through fastening hole 130a and the fastening hole (see FIG. 5). In this case, the upper surface of the pack gasket 130 is pressed by a coupling force of the upper lid 120 coupled to the side wall frame 112. Therefore, before the upper lid 120 is fastened, the upper surface of the pack gasket 130 higher than the height of the first protruding part P1 is pressed and positioned at the same height as an upper surface of the first protruding part P1. Accordingly, the pack gasket 130 is compressed between the upper lid 120 and the side wall frame upper surface 112a to fill a space between the upper lid 120 and the side wall frame 112, thereby exhibiting sealing performance such as watertightness.

As described above, even when the pack gasket 130 is compressed, the pack gasket 130 is designed such that there is a gap G1 between the first protruding part P1 and the side of the pack gasket 130.

Meanwhile, a corresponding screw coupling member N (e.g., a nut) may be fastened to the upper portion of the fastening member B to more reliably fasten the upper lid 120 and the pack gasket 130. The upper lid 120 is more firmly coupled to the side wall frame 112 by the coupling of the fastening member B and the screw coupling member N. Accordingly, the pack gasket 130 is also firmly maintained between the upper lid 120 and the side wall frame upper surface 112a, thereby ensuring sealing performance.

### (Second illustrative example)

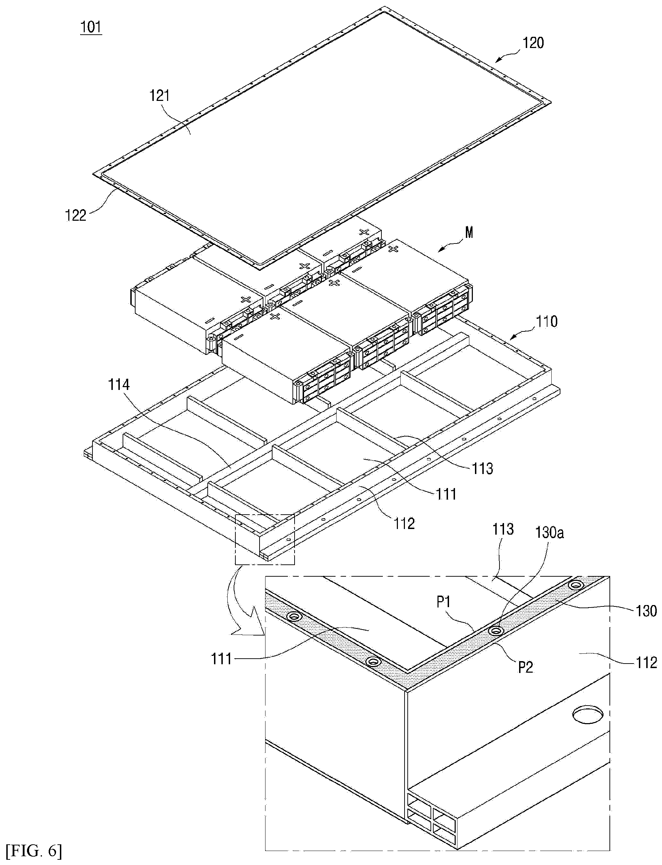

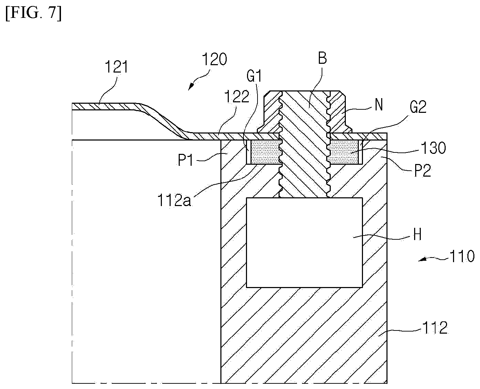

FIG. 6 is an exploded perspective view of a battery pack of a second illustrative example. FIG. 7 is a side cross-sectional view of the battery pack of the second embodiment.

In a battery pack 101 of the present embodiment, a second protruding part P2 is provided on a side wall frame upper surface 112a opposite to a first protruding part P1. That is, the second protruding part P2 covering another side of a pack gasket 130 opposite to one side of the pack gasket 130 blocked by the first protruding part P1 is provided along the side wall frame upper surface 112a. In this case, the pack gasket 130 is installed on the side wall frame upper surface 112a between the first protruding part P1 and the second protruding part P2.

As described above, the first protruding part P1 protects the pack gasket 130 from flames F in the battery pack 101. In the present embodiment, the pack gasket 130 is protected by both the first protruding part P1 and the second protruding part P2 and thus damage to the pack gasket 130 may be more reliably prevented. In addition, the pack gasket 130 is located between the first and second protruding parts P1 and P2 and is regulated between the first and second protruding parts P1 and P2 even after the pack gasket 130 is installed, so that the shape of the pack gasket 130 may be maintained stably. In this case, the second protruding part P2 regulates an outer side of the pack gasket 130 not to protrude from a side wall frame 112. Accordingly, the sealing performance of the pack gasket 130 is guaranteed.

The second protruding part P2 is provided on the side wall frame upper surface 112a along a side of the pack gasket 130. The second protruding part P2 may have a rectangular shape corresponding to the shape of the pack gasket 130.

Meanwhile, the second protruding part P2 may be integrally molded with the side wall frame 112. Alternatively, the second protruding part P2 may be separately manufactured and coupled to the side wall frame upper surface 112a by welding or the like. In this case, the second protruding part P1 may be formed of a metal with a high melting point, such as steel or aluminum, to protect the pack gasket 130 from the flames F.

In the present embodiment, gaps G1 and G2 having a predetermined width may be provided at least one of between the first protruding part P1 and the pack gasket 130 and between the second protruding part P2 and the pack gasket 130 to prevent heat from being transferred to the pack gasket 130 from the first protruding part P1 or the second protrudign part P2. In the example of FIG. 7, there are gaps G1 and G2 between the first protruding part P1 and the pack gasket 130 and between the second protruding part P2 and the pack gasket 130.

A height of the first protruding part P1 is set to be equal to that of the second protruding part P2. Thus, a height of an inner side of a flange part 122 of the upper lid 120 and heights of upper surfaces of the first and second protruding parts P1 and P2 are the same and thus assemblability of a fastening process improves.

Before the upper lid 120 is fastened, the height of the pack gasket 130 is greater than those of the first and second protruding parts P1 and P2 while the pack gasket 130 is seated on the side wall frame upper surface 112a. The upper lid 120 and the pack gasket 130 are coupled to the side wall frame upper surface 112a, when a fastening member B such as a bolt is coupled to the through fastening hole 120a of the upper lid 120, the through fastening hole 130a of the pack gasket 130, and a fastening hole of the side wall frame 120 (see FIG. 7). In this case, the upper surface of the pack gasket 130 is pressed by a coupling force of the upper lid 120 coupled to the side wall frame 112. Accordingly, the upper surface of the pack gasket 130 that is higher than the height of the first protruding part P1 and the height of the second protruding part P2 before the fastening of the upper lid 120 is pressed and thus positioned at the same height as the upper surfaces of the first protruding part P1 and the second protruding part P2. Accordingly, the pack gasket 130 is compressed between the upper lid 120 and the side wall frame upper surface 112a to fill a space between the upper lid 120 and the side wall frame 112 without a gap, thereby exhibiting sealing performance such as watertightness.

In the present embodiment, assemblability improves greatly, because the first protruding part P1 and the second protruding part P2 of the same height are located on both sides of the pack gasket 130. Conventionally, a bush (not shown) with a flange part is installed in the fastening hole of the pack gasket 130 to maintain the height of the upper surface of the pack gasket 130 constant when the pack gasket 130 is pressed by the upper lid 120. That is, when the upper lid 120 is pressed against the pack gasket 130, the flange part 122 prevents the upper lid 120 from being moved downward to be lower than the height of the flange part 122 while supporting the upper lid 120. Accordingly, the height of the pack gasket 130 compressed between the upper lid 120 and the side wall frame 112 may be maintained constant.

In the battery pack 101 of the present embodiment, the first protruding part P1 and the second protruding part P2 that function as a flange part of a conventional bush are positioned at both sides of the pack gasket 130 and thus the upper surfaces of the protruding parts P1 and P2 form opposite pressing surfaces of the upper lid 120. The upper lid 120 cannot be moved downward to be lower than the heights of the upper surfaces of the first and second protruding parts P1 and P2, and the pack gasket 130 is compressed to the same height as the upper surfaces of the first and second protruding parts P1 and P2. Accordingly, the pack gasket 130 is compressed to a uniform height and has a uniform compression force, thereby improving sealing performance. As described above, in the present embodiment, the height of the pack gasket 130 can be maintained constant without a bush, thereby improving sealing performance.

### (Third Embodiment, according to the invention)

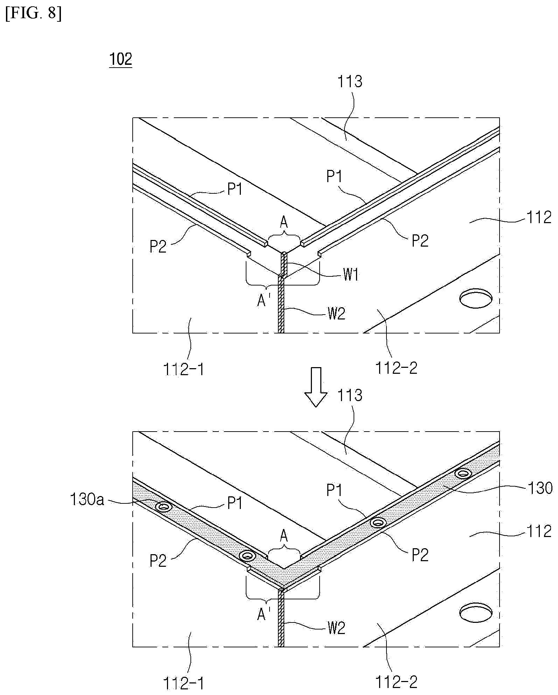

FIG. 8 is a partial perspective view of a battery pack 102 of a third embodiment, which is according to the present invention.

In FIG. 8, an upper drawing shows a state in which a pack gasket 130 is not installed, and a lower drawing shows a state in which the pack gasket 130 is installed on a side wall frame upper surface 112a.

As described above, the side wall frame 112 may be assembled by coupling four panels (side wall frame parts), i.e., front, rear, left, and right panels, to each other. Adjacent side wall frame parts 112-1 and 112-2 are disposed perpendicular to each other and ends thereof may be coupled to each other by welding. That is, as shown in FIG. 8, opposite contact surfaces of the vertically disposed side wall frame parts 112-1 and 112-2 may be coupled to each other by welding. Therefore, welded portions W1 and W2 are formed at a corner part of the side wall frame 112 assembled by coupling the side wall frame parts 112-1 and 112-2. Specifically, the welded portions W1 and W2 may be formed at edges of an upper surface and a side of the corner part of the side wall frame 112. Junctions generated by welding protrude convexly from the side wall frame upper surface 112a. When there are protruding joints as described above, it is difficult to install the pack gasket 130 in close contact with the side wall frame upper surface 112a. When the pack gasket 130 is not in close contact with the side wall frame 112, there is a gap between the pack gasket 130 and the side wall frame 112, thus degrading watertightness. Therefore, it is necessary to planarize the corner part of the side wall frame 112 by removing the welded joints by surface processing.

The lower drawing of FIG. 8 shows that the pack gasket 130 is installed after removing the joints at the corner part of the side wall frame.

However, it is very difficult to perform processing to remove the joints at the corner part of the side wall frame 112 when the first protruding part P1 is located at the corner part of the side wall frame 112 as shown in FIG. 3 or the first protruding part P1 and the second protruding part P2 are located at the corner part of the side wall frame 112 as shown in FIG. 6. That is, the first protruding part P1 or the first and second protruding parts P2 may interfere with the processing performed to remove the protruding joints, thus making it difficult to planarize the side wall frame upper surface 112a as desired.

In this regard, in the battery pack 102 of the present embodiment, the first protruding part P1 is not provided (in the case of the first embodiment) or the first protruding part P1 and the second protruding part P2 are not provided (in the case of the second embodiment) on the side wall frame upper surface 112a that is in a range of a predetermined length with respect to the corner part of the side wall frame 112 to which the side wall frame parts 112-1 and 122-2 are welded.

That is, as shown in FIG. 8, the protruding welded joints may be easily removed by a processing machine when there is no protrusion on the side wall frame upper surface 112a that is in a range of a predetermined length (A, A') with respect to the corner part of the side wall frame 112. Accordingly, the upper surface of the corner part of the side wall frame 112 may be processed to be a flat surface like other upper surfaces, and the pack gasket 130 may be installed in close contact with the flat surface to ensure watertightness.

The length may be determined in consideration of a space in which a machining machine (not shown) may enter to perform a machining operation on the corner part of the side wall frame 112. That is, the range of the length may be determined in consideration of the size of the machining machine and a work space.

In the present embodiment, the welding workability of the side wall frame 112 and the installation of the pack gasket 130 are considered. Meanwhile, the corner part of the side wall frame 112 is relatively far from a battery module M in the battery pack 102. Therefore, even when flames F occur in the battery pack 102, an effect on the corner part of the side wall frame 122 is small and thus an effect of the flames F on the pack gasket 130 installed at the corner part of the side wall frame 112 is also limited.

### (Fourth Embodiment)

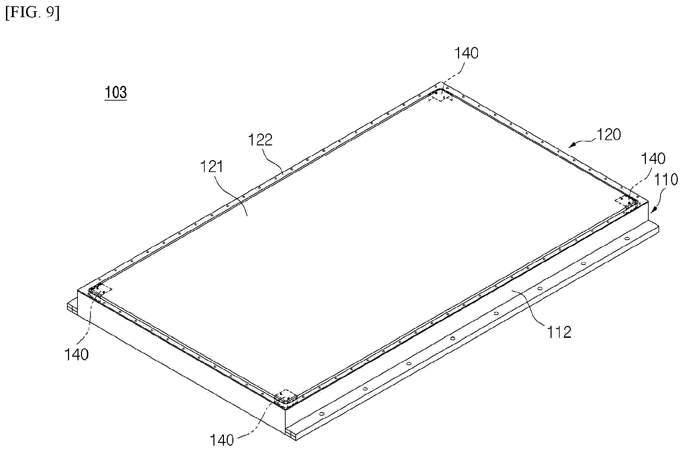

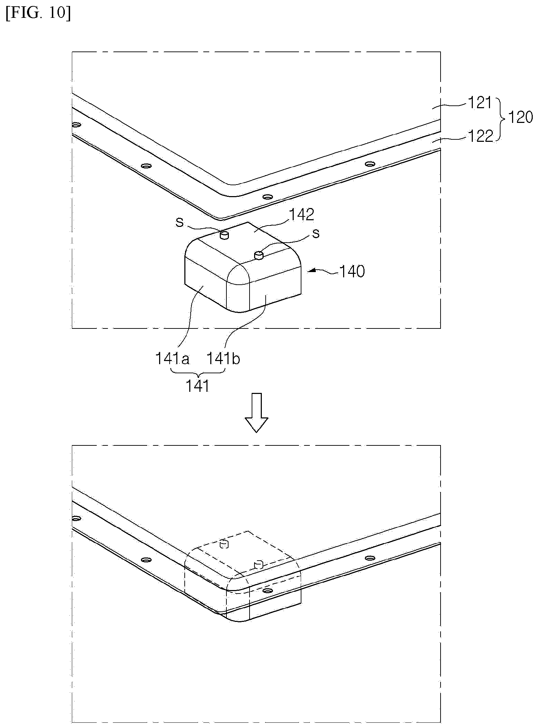

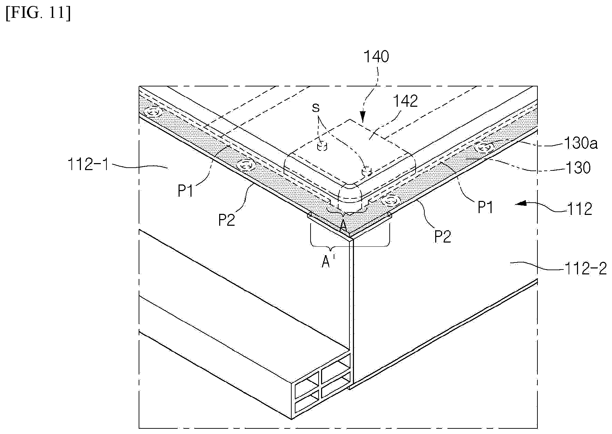

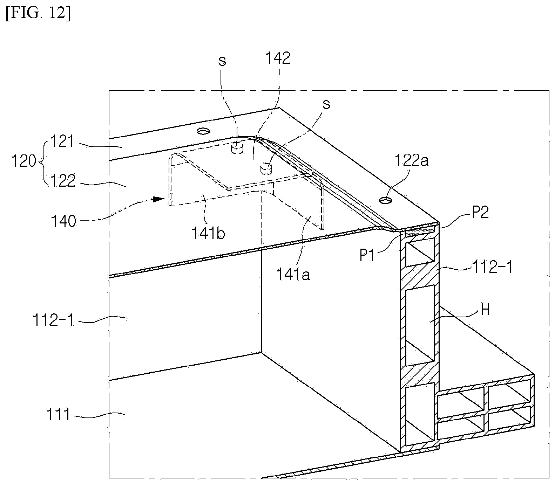

FIG. 9 is a perspective view of a battery pack of a fourth embodiment of the present invention. FIG. 10 is a perspective view of main parts of the battery pack of the fourth embodiment. FIG. 11 is a partial perspective view of the battery pack of the fourth embodiment. FIG. 12 is a partial cutaway perspective view of the battery pack of the fourth embodiment.

Compared to the battery pack 102 of the third embodiment, a battery pack 103 of the present embodiment is characterized in that a flame blocking bracket 140 is coupled to a corner part of an upper lid 120 corresponding to a corner part of a side wall frame 112 to block the corner part of the side wall frame 112 from the inside of the battery pack 103.

In the battery pack 102 of the third embodiment, the first protruding part P1 or the second protruding part P2 is not installed at the corner part of the side wall frame 112 in consideration of welding workability of the side wall frame 112 and the installation of the pack gasket 130. In this case, although an effect of flames F on the pack gasket 130 installed at the corner part of the side wall frame 112 is limited, the flames F may also affect the corner part of the side wall frame 112.

In the present embodiment, the flame blocking bracket 140 that blocks the corner part of the side wall frame 112 from the inside of the battery pack 103 is installed on the upper lid 120 instead of installing the first protruding part P1 or the second protruding part P2 at the corner part of the side wall frame 112 in consideration of the installation of the pack gasket 130. That is, the pack gasket 130 is more reliably protected by installing the flame blocking bracket 140 at the corner part of the upper lid 120 corresponding to the corner part of the side wall frame 112. According to the present embodiment, the corner part of the side wall frame 112 is easy to be planarized to facilitate the installation of the pack gasket 130 and maintain watertightness, and the pack gasket 130 can be more reliably protected by blocking the pack gasket 130 from the flames F by the first protruding part P1, the second protruding part P2, and the flame blocking bracket 140.

The flame blocking bracket 140 extends to be equal to or greater than a range of a predetermined length (A, A') in which no protruding part is installed to block the pack gasket 130 that is exposed because no protruding part is installed at the corner part of the side wall frame 112.

The flame blocking bracket 140 may be coupled to the upper lid 120 by, for example, spot welding. Reference numeral S shown in FIGS. 10 and 12 denotes a spot welding point or a filler metal part to be spot welded. The flame blocking bracket 140 may also be formed of a metal that withstands flames. The flame blocking bracket 140 may be formed of a material that is the same as or different from a material of the upper lid 120.

As illustrated in FIG. 10, the flame blocking bracket 140 may include a part coupled to the corner part of the upper lid 120 and a part covering the corner part of the side wall frame 112. For example, when the upper lid 120 includes a flange part 122 coupled to the upper surface of the side wall frame 112 and a cover part 121 bent upward from the flange part 122, the flame blocking bracket 140 may be installed at the corner part of the cover portion 121. Specifically, a part of the flame blocking bracket 140 installed at the corner part of the upper lid 120 (the cover part 121) may be referred to as an upper bracket 142. A part of the flame blocking bracket 140 that extends downward from the upper bracket 142 along an inner side of the corner part of the side wall frame 112 may be referred to as a corner bracket 141. In the present embodiment, the flame blocking bracket 140 includes the upper bracket 142 and the corner bracket 141. The corner bracket 141 includes a first bracket part 141a and a second bracket part 141b that are perpendicular to each other to correspond to a shape of the corner part of the side wall frame 112.

The corner bracket 141 extends horizontally from the corner part of the upper lid 120 along the inner side of the corner part of the side wall frame 112 to be at least equal to or greater than the range of the length (A, A'). In addition, the corner bracket 141 extends downward along the inner side of the corner part of the side wall frame 112 to cover the corner part of the side wall frame 112. Therefore, the flame blocking bracket 140 completely blocks the corner part of the side wall frame 112 at which the protruding parts P1 and P2 are not formed to effectively protect the pack gasket 130 seated on the corner part from flames.

The flame blocking bracket 140 may be installed to be in close contact with an inner side of the corner part of the side wall frame 112. In this case, the flange part 122 of the upper lid 120 may be closely coupled to the side wall frame upper surface 112a, and the flame blocking bracket 140 installed at the corner part of the cover part 121 of the upper lid 120 may be in close contact with an inner side of the side wall frame 112 adjacent to the side wall frame upper surface 112a. That is, as shown in FIGS. 11 and 12, the upper lid 120 may be coupled to the side wall frame 112 such that the first bracket part 141a and the second bracket part 141b of the corner bracket 141 are in close contact with the inner sides of the side wall frame parts 112-1 and 112-2 disposed perpendicular to each other, respectively.

However, the flame blocking bracket 140 does not necessarily have to be in close contact with the corner part of the side wall frame 112. When the size of the flame blocking bracket 140 is sufficient, the pack gasket 130 on the corner part of the side wall frame 112 may be sufficiently protected even when the flame blocking bracket 140 is spaced a predetermined distance from the inner side of the corner part of the side wall frame 112. In addition, when a predetermined assembly tolerance is considered, the upper lid 120 may be coupled to the side wall frame 112 such that the flame blocking bracket 140 is spaced apart from the corner part of the side wall frame 112, thereby improving assemblability of the upper lid 120 and the side wall frame 112.

The above description is only an example of the technical idea of the present invention and various modification and changes may be made by those of ordinary skill in the technical field to which the present invention pertains without departing from the essential features of the present invention. Therefore, the drawings of the present invention set forth herein are intended not to limit the technical idea of the present invention but to describe the technical idea, and the scope of the technical idea of the present invention is not limited by the drawings. The scope of protection for the present invention should be interpreted based on the following claims.

In the present specification, terms representing directions such as upper, lower, left, right, forward and backward are used only for convenience of description and thus it will be obvious that these terms may be changed according to a position of an object or an observer.

### (Reference Numerals)

100, 101, 102, 103: battery pack
110: lower pack housing
111: bottom plate
112: side wall frame
112 -1, 112 -2: side wall frame part
112a: side wall frame upper surface
113: left/right partition
114: central partition
120: upper lid
121: cover part
122: flange part
122a: through fastening hole
M: battery module
130: pack gasket
130a: through fastening hole
P1: first protruding part
P2: second protruding part
H: hollow channel
F: flame
G1: gap
G2: gap
B: fastening member
N: screw coupling member
W1, W2: welded part
140: flame blocking bracket
141: corner bracket
142: upper bracket

## Claims

1. A battery pack comprising:
a lower pack housing (110) including a bottom plate (111) and a side wall frame (112) surrounding edges of the bottom plate (111);
an upper lid (120) coupled to an upper surface of the side wall frame (112) while covering the lower pack housing (110); and
a pack gasket (130) installed between the upper surface of the side wall frame (112) and the upper lid (120),
wherein a first protruding part (P1) is provided along the upper surface of the side wall frame (112) to block an inside of the battery pack and the pack gasket (130),
wherein the battery pack further comprises:
a second protruding part (P2) provided along the upper surface of the side wall frame (112) to cover another side of the pack gasket (130) opposite to one side of the pack gasket (130) blocked by the first protruding part (P1),
wherein the pack gasket (130) is installed on the upper surface of the side wall frame (112) between the first protruding part (P1) and the second protruding part (P2),
**characterised in that** the side wall frame (112) is assembled by welding side wall frame parts (112-1, 112-2) disposed vertically,
wherein the first protruding part (P1) and the second protruding part (P2) are not provided on the upper surface of the side wall frame (112) that is in a range of a predetermined length with respect to a corner part of the side wall frame (112) to which the side wall frame parts (112-1, 112-2) are welded.

2. The battery pack of claim 1, wherein there is a gap (G1) with a predetermined width between the first protruding part (P1) and the pack gasket (130).

3. The battery pack of claim 1, wherein a height of the first protruding part (P1) is less than a height of the pack gasket (130), and
an upper surface of the pack gasket (130) is located at the same height as an upper surface of the first protruding part (P1) due to pressing of the upper surface of the pack gasket (130) by a coupling force of the upper lid (120) coupled to the side wall frame (112).

4. The battery pack of claim 1, wherein there is a gap (G2) with a predetermined width at least one of between the first protruding part (P1) and the pack gasket (130) and between the second protruding part (P2) and the pack gasket (130).

5. The battery pack of claim 1, wherein heights of the first protruding part (P1) and the second protruding part (P2) are equal to each other and are less than a height of the pack gasket (130), and
an upper surface of the pack gasket (130) is located at the same height as upper surfaces of the first protruding part (P1) and the second protruding part (P2) due to pressing of the upper surface of the pack gasket (130) by a coupling force of the upper lid (120) coupled to the side wall frame (112).

6. The battery pack of claim 1, wherein the upper lid (120) and the pack gasket (130) comprise through fastening holes corresponding to each other, and the upper lid (120) and the pack gasket (130) are coupled to the upper surface of the side wall frame (112) by coupling a fastening member to the side wall frame (112) while passing through the through fastening holes.

7. The battery pack of claim 1, further comprising a flame blocking bracket (140) configured to block the corner part of the side wall frame (112) from the inside of the battery pack, the flame blocking bracket (140) being coupled to a corner part of the upper lid (120) corresponding to the corner part of the side wall frame (112).

8. The battery pack of claim 7, wherein the flame blocking bracket (140) extends horizontally from the corner part of the upper lid (120) along an inner side of the corner part of the side wall frame (112) to be equal to or greater than the predetermined length, and extends downward along the inner side of the corner part of the side wall frame (112) to cover the cover part of the side wall frame (112).

9. The battery pack of claim 7, wherein the upper lid (120) is coupled to the side wall frame (112) to cause the flame blocking bracket (140) to be in close contact with or be spaced a predetermined distance from an inner side of the corner part of the side wall frame (112).

10. The battery pack of claim 7, wherein the upper lid (120) comprises a flange part (122) coupled to the upper surface of the side wall frame (112) and a cover part (121) bent upward from the flange part (122), and
the flame blocking bracket (140) is installed on a corner part of the cover part (121).

11. The battery pack of claim 10, wherein the flame blocking bracket comprises:
an upper bracket (142) coupled to the cover part (121); and
a corner bracket (141) extending downward from the upper bracket (142) along an inner side of the corner part (121) of the side wall frame (112).

## Patentansprüche

1. Batteriepack, umfassend:
• ein unteres Packgehäuse (110), das eine Bodenplatte (111) und einen Seitenwandrahmen (112) enthält, der Ränder der Bodenplatte (111) umgibt;
• einen oberen Deckel (120), der mit einer Oberfläche des Seitenwandrahmens (112) gekoppelt ist, während er das untere Packgehäuse (110) abdeckt; und
• eine Packdichtung (130), die zwischen der Oberfläche des Seitenwandrahmens (112) und dem oberen Deckel (120) installiert ist,
wobei ein erster vorspringender Teil (P1) entlang der Oberfläche des Seitenwandrahmens (112) bereitgestellt ist, um eine Innenseite des Batteriepacks und die Packdichtung (130) zu blockieren,
wobei das Batteriepack ferner umfasst:
• einen zweiten vorspringenden Teil (P2), der entlang der Oberfläche des Seitenwandrahmens (112) bereitgestellt ist, um eine andere Seite der Packdichtung (130) abzudecken, die einer Seite der Packdichtung (130) gegenüberliegt, die durch den ersten vorspringenden Teil (P1) blockiert ist,
wobei die Packdichtung (130) auf der Oberfläche des Seitenwandrahmens (112) zwischen dem ersten vorspringenden Teil (P1) und dem zweiten vorspringenden Teil (P2) installiert ist,
**dadurch gekennzeichnet dass**
der Seitenwandrahmen (112) durch Verschweißen von vertikal angeordneten Seitenwandrahmenteilen (112-1, 112-2) zusammengebaut ist,
wobei der erste vorspringende Teil (P1) und der zweite vorspringende Teil (P2) nicht auf der Oberfläche des Seitenwandrahmens (112) bereitgestellt sind, die in einem Bereich einer vorbestimmten Länge in Bezug auf einen Eckteil des Seitenwandrahmens (112) liegt, an den die Seitenwandrahmenteile (112-1, 112-2) geschweißt sind.

2. Batteriepack nach Anspruch 1, wobei ein Spalt (G1) mit einer vorbestimmten Breite zwischen dem ersten vorspringenden Teil (P1) und der Packdichtung (130) vorhanden ist.

3. Batteriepack nach Anspruch 1, wobei eine Höhe des ersten vorspringenden Teils (P1) geringer ist als eine Höhe der Packdichtung (130), und
eine Oberfläche der Packdichtung (130) auf der gleichen Höhe wie eine Oberfläche des ersten vorspringenden Teils (P1) angeordnet ist, aufgrund des Pressens der Oberfläche der Packdichtung (130) durch eine Kopplungskraft des oberen Deckels (120), der mit dem Seitenwandrahmen (112) gekoppelt ist.

4. Batteriepack nach Anspruch 1, wobei ein Spalt (G2) mit einer vorbestimmten Breite mindestens eines von zwischen dem ersten vorspringenden Teil (P1) und der Packdichtung (130) und zwischen dem zweiten vorspringenden Teil (P2) und der Packdichtung (130) vorhanden ist.

5. Batteriepack nach Anspruch 1, wobei Höhen des ersten vorspringenden Teils (P1) und des zweiten vorspringenden Teils (P2) einander gleich sind und geringer sind als eine Höhe der Packdichtung (130), und
eine Oberfläche der Packdichtung (130) auf der gleichen Höhe wie Oberflächen des ersten vorspringenden Teils (P1) und des zweiten vorspringenden Teils (P2) angeordnet ist, aufgrund des Pressens der Oberfläche der Packdichtung (130) durch eine Kopplungskraft des oberen Deckels (120), der mit dem Seitenwandrahmen (112) gekoppelt ist.

6. Batteriepack nach Anspruch 1, wobei der obere Deckel (120) und die Packdichtung (130) einander entsprechende Durchgangsbefestigungslöcher umfassen, und der obere Deckel (120) und die Packdichtung (130) mit der Oberfläche des Seitenwandrahmens (112) durch Koppeln eines Befestigungselements mit dem Seitenwandrahmen (112) gekoppelt sind, während sie durch die Durchgangsbefestigungslöcher hindurchgehen.

7. Batteriepack nach Anspruch 1, ferner umfassend eine Flammensperrhalterung (140), die konfiguriert ist, um den Eckteil des Seitenwandrahmens (112) von der Innenseite des Batteriepacks zu blockieren, wobei die Flammensperrhalterung (140) mit einem Eckteil des oberen Deckels (120) gekoppelt ist, der dem Eckteil des Seitenwandrahmens (112) entspricht.

8. Batteriepack nach Anspruch 7, wobei sich die Flammensperrhalterung (140) horizontal von dem Eckteil des oberen Deckels (120) entlang einer Innenseite des Eckteils des Seitenwandrahmens (112) erstreckt, um gleich der vorbestimmten Länge oder größer als diese zu sein, und sich entlang der Innenseite des Eckteils des Seitenwandrahmens (112) nach unten erstreckt, um den Abdeckteil des Seitenwandrahmens (112) abzudecken.

9. Batteriepack nach Anspruch 7, wobei der obere Deckel (120) mit dem Seitenwandrahmen (112) gekoppelt ist, um zu bewirken, dass die Flammensperrhalterung (140) in engem Kontakt mit einer Innenseite des Eckteils des Seitenwandrahmens (112) steht oder um einen vorbestimmten Abstand von dieser beabstandet ist.

10. Batteriepack nach Anspruch 7, wobei der obere Deckel (120) ein Flanschteil (122), das mit der Obersfläche des Seitenwandrahmens (112) gekoppelt ist, und ein Abdeckteil (121), das von dem Flanschteil (122) nach oben gebogen ist, umfasst, und
die Flammensperrhalterung (140) an einem Eckteil des Abdeckteils (121) installiert ist.

11. Batteriepack nach Anspruch 10, wobei die Flammensperrhalterung umfasst:
• eine obere Halterung (142), die mit dem Abdeckteil (121) gekoppelt ist; und
• eine Eckhalterung (141), die sich von der oberen Halterung (142) entlang einer Innenseite des Eckteils des Seitenwandrahmens (112) nach unten erstreckt.

## Revendications

1. Bloc-batterie comprenant :
• un boîtier de bloc inférieur (110) incluant une plaque de fond (111) et un cadre de paroi latérale (112) entourant des bords de la plaque de fond (111) ;
• un couvercle supérieur (120) couplé à une surface supérieure du cadre de paroi latérale (112) tout en couvrant le boîtier de bloc inférieur (110) ; et
• un joint de bloc (130) installé entre la surface supérieure du cadre de paroi latérale (112) et le couvercle supérieur (120),
dans lequel une première partie en saillie (P1) est prévue le long de la surface supérieure du cadre de paroi latérale (112) pour bloquer un intérieur du bloc-batterie et le joint de bloc (130),
dans lequel le bloc-batterie comprend en outre :
• une deuxième partie en saillie (P2) prévue le long de la surface supérieure du cadre de paroi latérale (112) pour couvrir un autre côté du joint de bloc (130) opposé à un côté du joint de bloc (130) bloqué par la première partie en saillie (P1),
dans lequel le joint de bloc (130) est installé sur la surface supérieure du cadre de paroi latérale (112) entre la première partie en saillie (P1) et la deuxième partie en saillie (P2),
**caractérisé en ce que**
le cadre de paroi latérale (112) est assemblé par soudage de parties de cadre de paroi latérale (112-1, 112-2) disposées verticalement,
dans lequel la première partie en saillie (P1) et la deuxième partie en saillie (P2) ne sont pas prévues sur la surface supérieure du cadre de paroi latérale (112) qui se trouve dans une plage d'une longueur prédéterminée par rapport à une partie de coin du cadre de paroi latérale (112) à laquelle les parties de cadre de paroi latérale (112-1, 112-2) sont soudées.

2. Bloc-batterie selon la revendication 1, dans lequel il y a un espace (G1) avec une largeur prédéterminée entre la première partie en saillie (P1) et le joint de bloc (130).

3. Bloc-batterie selon la revendication 1, dans lequel une hauteur de la première partie en saillie (P1) est inférieure à une hauteur du joint de bloc (130), et
une surface supérieure du joint de bloc (130) est située à la même hauteur qu'une surface supérieure de la première partie en saillie (P1) en raison du pressage de la surface supérieure du joint de bloc (130) par une force de couplage du couvercle supérieur (120) couplé au cadre de paroi latérale (112).

4. Bloc-batterie selon la revendication 1, dans lequel il y a un espace (G2) avec une largeur prédéterminée au moins l'un d'entre la première partie en saillie (P1) et le joint de bloc (130) et entre la deuxième partie en saillie (P2) et le joint de bloc (130).

5. Bloc-batterie selon la revendication 1, dans lequel des hauteurs de la première partie en saillie (P1) et de la deuxième partie en saillie (P2) sont égales entre elles et sont inférieures à une hauteur du joint de bloc (130), et
une surface supérieure du joint de bloc (130) est située à la même hauteur que des surfaces supérieures de la première partie en saillie (P1) et de la deuxième partie en saillie (P2) en raison du pressage de la surface supérieure du joint de bloc (130) par une force de couplage du couvercle supérieur (120) couplé au cadre de paroi latérale (112).

6. Bloc-batterie selon la revendication 1, dans lequel le couvercle supérieur (120) et le joint de bloc (130) comprennent des trous de fixation traversants correspondant les uns aux autres, et le couvercle supérieur (120) et le joint de bloc (130) sont couplés à la surface supérieure du cadre de paroi latérale (112) par couplage d'un organe de fixation au cadre de paroi latérale (112) tout en passant à travers les trous de fixation traversants.

7. Bloc-batterie selon la revendication 1, comprenant en outre un support de blocage de flamme (140) configuré pour bloquer la partie de coin du cadre de paroi latérale (112) depuis l'intérieur du bloc-batterie, le support de blocage de flamme (140) étant couplé à une partie de coin du couvercle supérieur (120) correspondant à la partie de coin du cadre de paroi latérale (112).

8. Bloc-batterie selon la revendication 7, dans lequel le support de blocage de flamme (140) s'étend horizontalement depuis la partie de coin du couvercle supérieur (120) le long d'un côté intérieur de la partie de coin du cadre de paroi latérale (112) pour être supérieur ou égal à la longueur prédéterminée, et s'étend vers le bas le long du côté intérieur de la partie de coin du cadre de paroi latérale (112) pour couvrir la partie de couvercle du cadre de paroi latérale (112).

9. Bloc-batterie selon la revendication 7, dans lequel le couvercle supérieur (120) est couplé au cadre de paroi latérale (112) pour amener le support de blocage de flamme (140) à être en contact étroit avec ou être espacé d'une distance prédéterminée par rapport à un côté intérieur de la partie de coin du cadre de paroi latérale (112).

10. Bloc-batterie selon la revendication 7, dans lequel le couvercle supérieur (120) comprend une partie de bride (122) couplée à la surface supérieure du cadre de paroi latérale (112) et une partie de couvercle (121) pliée vers le haut depuis la partie de bride (122), et
le support de blocage de flamme (140) est installé sur une partie de coin de la partie de couvercle (121).

11. Bloc-batterie selon la revendication 10, dans lequel le support de blocage de flamme comprend :
• un support supérieur (142) couplé à la partie de couvercle (121) ; et
• un support d'angle (141) s'étendant vers le bas depuis le support supérieur (142) le long d'un côté intérieur de la partie de coin du cadre de paroi latérale (112).
